# EUROPÄISCHE PATENTSCHRIFT

(11) **EP 2 780 104 B1**
(45) Veröffentlichungstag und Bekanntmachung des Hinweises auf die Patenterteilung: **16.09.2015**
(21) Anmeldenummer: 12816643.6
(22) Anmeldetag: 15.11.2012
(51) Int. Cl.: C04B 40/00, C04B 14/06, C04B 14/28, C04B 26/10, B28B 1/00, B28B 3/12, B28B 13/02, B30B 5/06

(54) **VORRICHTUNG UND VERFAHREN ZUR HERSTELLUNG EINER PLATTE AUS KUNSTSTEINMATERIAL**
DEVICE AND METHOD FOR PRODUCING A SLAB FROM ARTIFICIAL STONE MATERIAL
DISPOSITIF ET PROCÉDÉ POUR LA FABRICATION D'UNE DALLE EN PIERRE ARTIFICIELLE

(30) Priorität: 17.11.2011 AT 17132011
(43) Veröffentlichungstag der Anmeldung: 24.09.2014
(73) Patentinhaber: Berndorf Band GmbH, 2560 Berndorf (AT)
(72) Erfinder: KAGER, Franz, A-2320 Schwechat (AT)
(74) Vertreter: Burger, Hannes
(86) Internationale Anmeldenummer: PCT/AT2012/050176
(87) Internationale Veröffentlichungsnummer: WO 2013/071326

(56) Entgegenhaltungen:
- WO-A1-2010/115225
- BE-A- 565 536
- DE-A1- 4 142 999
- US-A- 4 300 725

## Beschreibung

Die Erfindung betrifft eine Vorrichtung zur Herstellung einer Platte aus Kunststeinmaterial mit einer Doppelbandpresse mit einem Unterband und einem Oberband, wobei die Vorrichtung eine Beschickungsvorrichtung zur Beschickung der Doppelbandpresse mit einem Material für die Platte aufweist.

Weiteres betrifft die Erfindung ein Verfahren zur Herstellung einer Platte aus Kunststeinmaterial bestehend aus einem mineralischen Füllstoff und einem polymeren Bindemittel.

Aus der WO 2010/115225 sind eine gattungsgemäße Vorrichtung und ein gattungsgemäßes Verfahren zur kontinuierlichen Herstellung von Platten aus Kunststeinmaterial unter Verwendung einer Doppelbandpresse bekannt geworden, wobei eine Pressmasse verpresst wird, die ein Gemisch aus einem mineralischen Füllstoff und einem polymeren Bindemittel umfasst. Das Bindemittel ist ausgewählt aus Polyester-, Polyurethan- oder Epoxidharzen, wobei die Pressmasse 85% bis 95% Füllstoff und 5% bis 15% Bindemittel aufweist. Der Füllstoff kann vorzugsweise ausgewählt sein aus Steinmaterial, Marmormehl, Quarzit, Quarz oder einer Mischung davon, mit einer Partikelgröße von 1 µm bis 10 mm. Weiteres können Pigmente, Farbstoffe, Spiegel- bzw. Glasbruchstücke zugefügt sein. Zur Herstellung der Platten wird eine Doppelbandpresse mit einer Vibrationseinrichtung im Bereich einer Vorverdichtungszone verwendet, um eine homogene Verteilung der Pressmasse zu erzielen.

Die bekannte Vorrichtung ist jedoch aufgrund der Vibrationseinrichtung sehr aufwendig in der Herstellung. Ein weiterer Nachteil des bekannten Verfahrens bzw. der bekannten Vorrichtung besteht darin, dass auf Grund von schlechten Transporteigenschaften der Pressmasse zwischen den Bändern der Doppelbandpresse die Größe der Platten, welche hergestellt werden können, stark limitiert ist. Auch lassen sich die Größen von Bereichen gleicher Farbgebung und die Verteilung dieser Bereiche auf den Platten nicht gut beeinflussen.

Es ist daher Aufgabe der vorliegenden Erfindung eine Vereinfachung des Produktionsprozesses und eine Verbesserung der Qualität des Produktes zu ermöglichen.

Diese Aufgabe wird mit einer Vorrichtung nach Anspruch 1 und einem Verfahren nach Anspruch 7 gelöst.

Die Erfindung ermöglicht die Herstellung von Kunststeinplatten mit farblich scharf voneinander abgegrenzten Bereichen, da durch Drehung der Trommel ein Granulierungsprozess durchgeführt werden kann, durch welchen aus einer Mischung der Grundmaterialien, welche in die Trommel eingefüllt werden, ein Granulat mit vorgebbaren Eigenschaften gewonnen werden kann. So kann das Granulat abgerundete Partikel, beispielsweise mit einer Oberfläche von 1 - 40cm² aufweisen.

Ein Aspekt der Erfindung sieht vor, dass an einer Auslassöffnung der Trommel eine Verteilereinrichtung zur Verteilung eines aus der Trommel austretenden Granulats vorgesehen ist. Durch die Verteilereinrichtung kann eine homogene Verteilung des aus der Trommel austretenden Granulats auf dem Unterband bzw. eines Transportmittels in Richtung des Unterbandes erzielt werden.

Erfindungsgemäß ist die Verteilervorrichtung als Drehteller ausgeführt. Der Drehteller ist angetrieben und rotiert um eine normal zu seiner Oberfläche verlaufende Achse. Hierbei schleudert er das Granulat auf das Unterband oder auf ein dem Unterband vorgeschaltetes Förderband. Hierdurch kann auf einfache Weise eine homogene Verteilung der Partikel des Granulats gewährleistet werden. Dies ist insbesondere dann von Vorteil, wenn zur Erzeugung des Granulats mehrere Trommeln verwendet werden, welche je ein Granulat einer einzigen Farbe herstellen.

Gemäß einer weiteren Ausführungsform der Erfindung, ist an dem Drehteller eine seitlich teilweise umgebene Blende vorgesehen, wobei die Blende in Transportrichtung des Granulats in Richtung der Doppelbandpresse offen ist Hierdurch kann ein kontrollierter Austritt des Granulats von dem Drehteller auf des Unterband der Bandpresse bzw. auf das dem Unterband vorgeschaltete Förderband gewährleistet werden. Durch die Anordnung der Blende wird eine Austrittsrichtung für das Granulat definiert und es entsteht kein Verlust durch Austritt des farbigen Granulats in unerwünschte Richtungen. Eine vorteilhafte Variante sieht vor, dass die Blende gegenüber dem Drehteller ortsfest angeordnet ist.

Gemäß einer günstigen Weiterbildung kann es vorgesehen sein, dass der Drehteller mit einer Schicht aus einem elastomeren Material, insbesondere Gummi, beschichtet ist. Dadurch kann eine wesentliche Verbesserung bei der Weiterbeförderung des Granulats von dem Drehteller auf das Unterband erzielt werden.

Eine vorteilhafte Weiterbildung der Erfindung besteht darin, dass zwischen der zumindest einen Trommel und Verteilervorrichtung zumindest eine Zuführvorrichtung vorgesehen ist. Dadurch kann eine gezielte Leitung des Granulats von der Trommel auf die Verteilervorrichtung, beispielsweise den Drehteller, erfolgen.

Gemäß einer weiteren Ausführungsform kann die Zuführeinheit trichterförmig ausgebildet sein.

Erfindungsgemäß sind zwei Trommeln vorgesehen. Dies ermöglicht es mit jeder Trommel je ein Granulat herzustellen, welches sich farblich von dem mit einer anderen Trommel erzeugten Granulat unterscheidet.

Die obengenannte Aufgabe kann auch mit einem Verfahren nach Anspruch 7 gelöst werden.

Nach der Herstellung des Granulates kann dieses homogen über das Unterband oder über ein dem Unterband vorgeschaltetes Förderband verteilt werden. Mittels weiter unten beschriebenen Vorverdichterwalzen kann aus dem homogen verteilten Granulat ein plattenförmiger Vorformling hergestellt werden, welcher in weiterer Folge der Doppelbandpresse zugeführt wird. Das erfindungsgemäße Verfahren ermöglicht die Herstellung von Kunststeinplatten mit farblich scharf voneinander abgegrenzten Bereichen.

Der Granulierungsprozess wird solange durchgeführt, bis die Partikel des mit der Trommel erzeugten Granulats eine vorgegebene Sphärizität aufweisen.

Gemäß einer bevorzugten Ausführungsform der Erfindung wird der Granulierungsprozess solange durchgeführt, bis die Partikel eine Sphärizität nach Rittenhouse von 0,75 -0,97 aufweisen, wobei die Partikel des Granulats eine Korngröße mit einem Durchmesser von 5 mm-30 mm aufweisen können.

In dem ersten Schritt wird der Trommel bevorzugt ein Füllgemisch zugeführt, welches zumindest 60% Steinmaterial, insbesondere Steinmehl, mit einer Partikelgröße von 1 µm bis 10 mm aufweist.

Die Erfindung samt weiteren Vorteilen wird im Folgenden anhand von nicht einschränkenden Ausführungsbeispielen, welche in den Zeichnungen dargestellt sind, näher erläutert:
Es zeigen jeweils in stark schematisch vereinfachter Darstellung:
   - Fig. 1: eine perspektivische Ansicht einer erfindungsgemäße Vorrichtung;
   - Fig. 2: eine Seitenansicht der Vorrichtung aus Fig. 1;
   - Fig. 3: eine Draufsicht auf die Vorrichtung aus Fig. 1;
   - Fig. 4: eine perspektivische Ansicht einer Beschickungsvorrichtung der Vorrichtung aus Fig. 1;
   - Fig. 5: eine Seitenansicht der Beschickungsvorrichtung aus Fig. 4;
   - Fig. 6: eine Ansicht aus der Beschickungsvorrichtung aus der Richtung 6 in Fig. 5;
   - Fig. 7: eine Ansicht der Beschickungsvorrichtung aus der Richtung 7 in Fig. 5;
   - Fig. 8: einen Schnitt entlang der Linie 8 - 8 in Fig. 5;
   - Fig. 9: eine Ansicht der Beschickungsvorrichtung aus der Richtung 9 in Fig. 7;
   - Fig. 10: eine Draufsicht auf die Beschickungsvorrichtung aus Fig. 5 und
   - Fig. 11: den Standardsatz zur Sphärizitätsbestimmung nach Rittenhouse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Auch sei darauf hingewiesen, dass die Figuren übergreifend beschrieben sind.

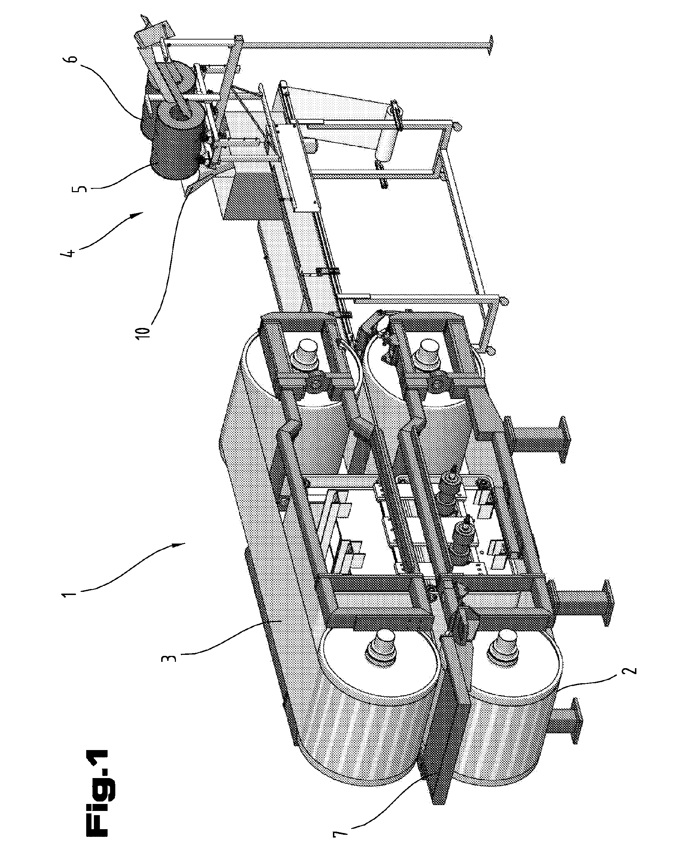

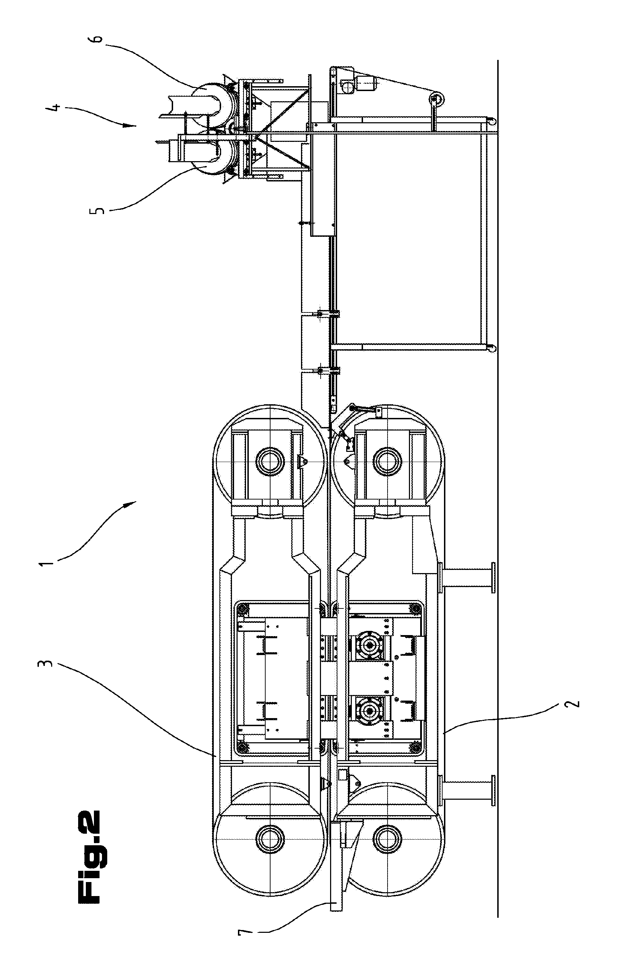

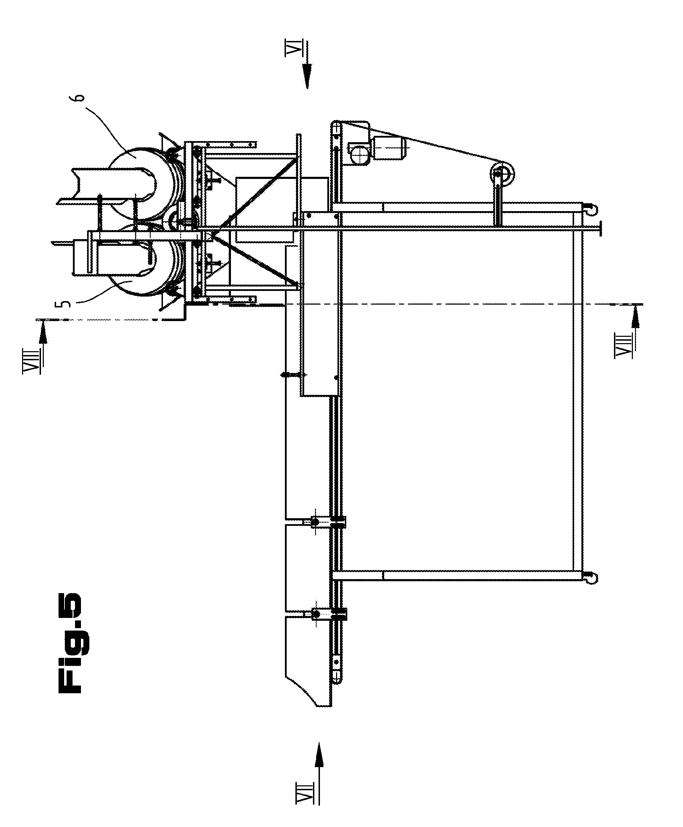

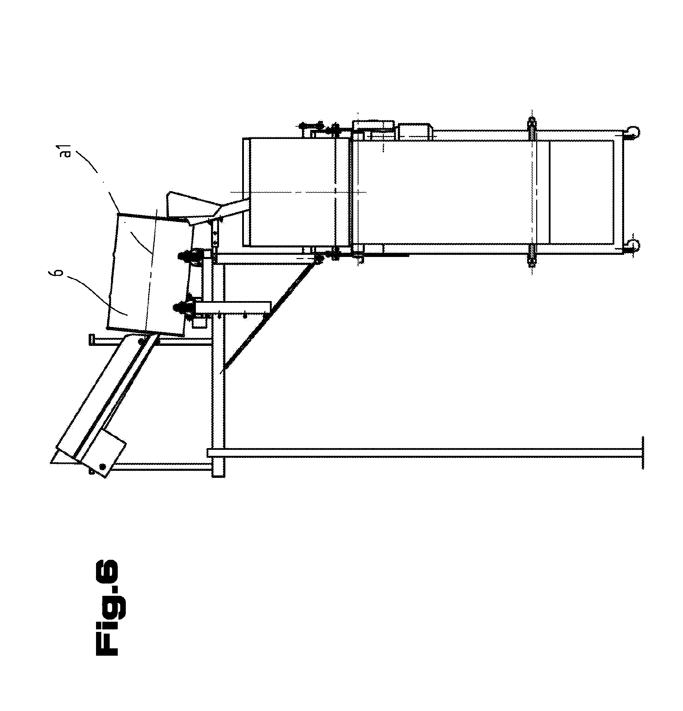

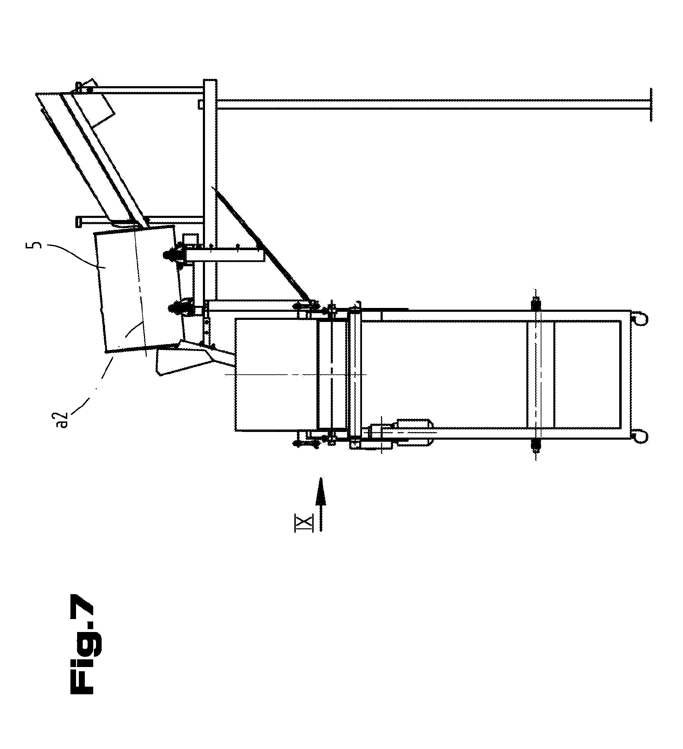

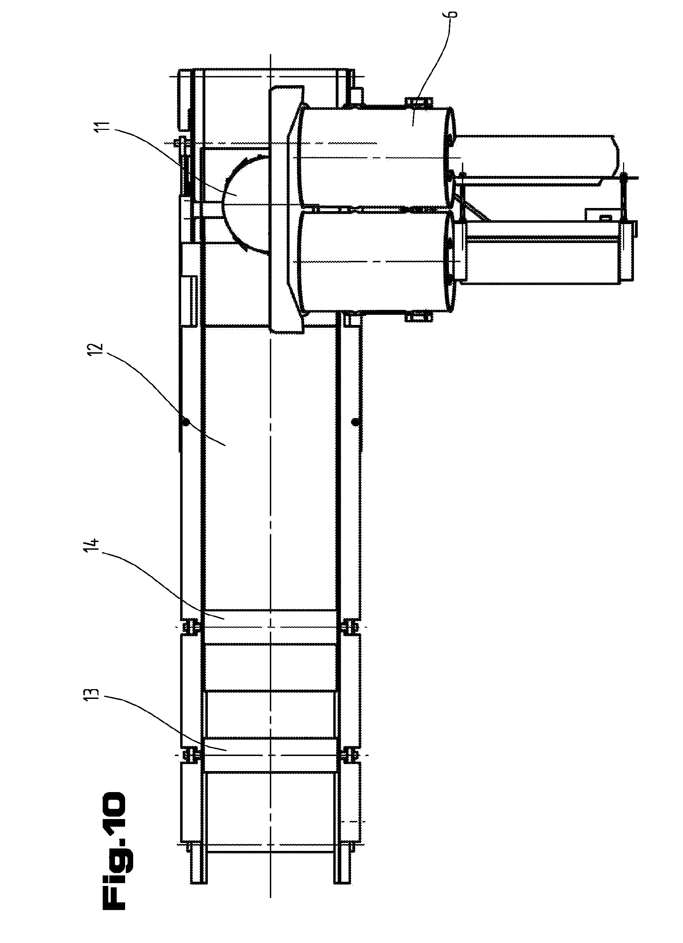

Gemäß Figur 1 und 2 weist eine erfindungsgemäße Vorrichtung 1 eine Doppelbandpresse mit einem Unterband 2 und einem Oberband 3 auf. Die dargestellte Vorrichtung 1 weist ferner eine Beschickungsvorrichtung 4 auf, welche, wie aus den Figuren 1 bis 10 ersichtlich ist, zwei Trommeln 5 und 6 umfasst. Die Trommeln 5 und 6 sind jeweils um ihre Längsachsen, welche in Fig. 6 und 7 mit den Bezugszeichen a1 und a2 versehen sind, drehbar gelagert. Die Trommeln 5 und 6 können, wie dargestellt, gleichartig ausgebildet sein.

In jede der Trommeln 5 und 6 wird ein Füllgemisch eingefüllt, welchem Farbpartikel zugesetzt sind. Das Füllgemisch kann beispielsweise zumindest 60% Steinmaterial, insbesondere Steinmehl, mit einer Partikelgröße von 1 µm bis 10 mm aufweisen. Weiteres sind dem Füllgemisch Polymere als Bindemittel zugesetzt. Insbesondere kann das Füllgemisch zusammengesetzt sein, wie es aus der eingangs genannten WO 2010/115225 bekannt geworden ist. So können als Bindemittel Polyester-, Polyurethan- oder Epoxidharzen vorgesehen sein, und die Pressmasse 85% bis 95% Füllstoff und 5% bis 15% Bindemittel aufweisen. Der Füllstoff kann vorzugsweise aus Steinmaterial, Marmormehl, Quarzit, Quarz oder einer Mischung davon bestehen und eine Partikelgröße von 1 µm bis 10 mm aufweisen.

Die Anzahl der Trommeln 5 und 6 kann gemäß der Anzahl der gewünschten Farben für die herzustellende Kunststeinplatte 7 variiert werden. Erfindungsgemäß wird mit einer Trommel 5 und 6 je ein Granulat einer Farbe hergestellt, wobei sich die Farben der mit den Trommeln 5 und 6 hergestellten Granulate voneinander unterscheiden. So kann beispielsweise mit der Trommel 5 ein Granulat weißer Farbe und mit der Trommel 6 ein Granulat schwarzer Farbe hergestellt werden.

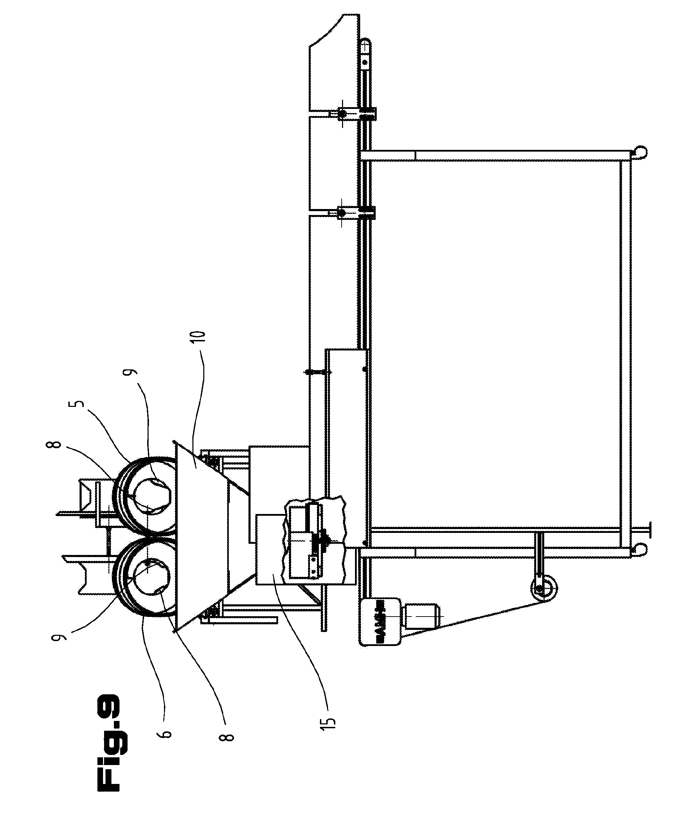

Die Trommeln 5 und 6 können in ihrem Inneren angebrachte Mitnehmer aufweisen, welche in Fig. 9 mit den Bezugszeichen 8 und 9 versehen sind. Die Mitnehmer 8, 9 können beispielsweise die Form von Leisten aufweisen.

Das Füllmaterial wird in Einlassöffnungen der Trommeln 5 und 6 eingefüllt und in den Trommeln 5 und 6 durch Rotation der Trommeln 5 und 6 solange granuliert bis aus dem Füllmaterial ein Granulat erhalten wird, dessen Partikelgröße eine vorgegebene Sphärizität und bestimmte Korngröße aufweist.

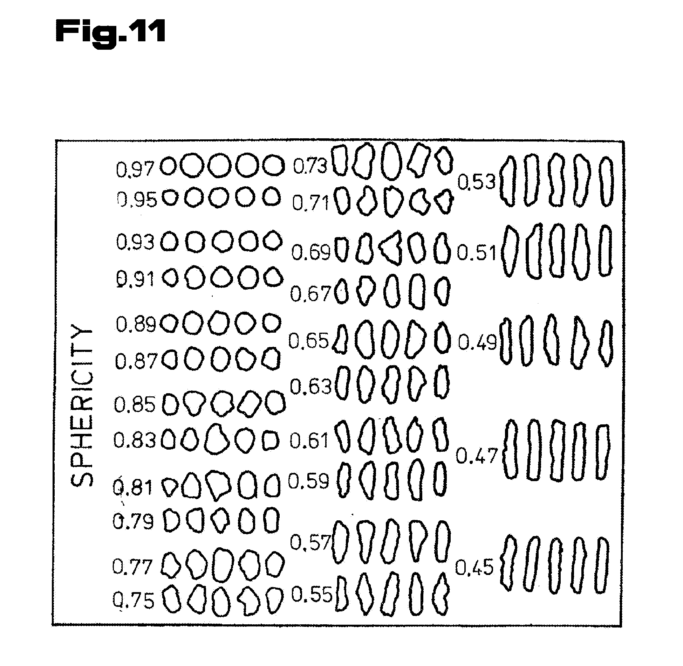

Die Anzahl der Drehungen der Trommeln 5 und 6 pro Zeiteinheit bzw. die zugeführte Energie bestimmen hierbei die gewünschten Eigenschaften des resultierenden Granulats. Bevorzugter Weise weist das resultierende Granulat welches die jeweilige Trommel 5, 6 verlässt eine Sphärizität nach Rittenhouse von 0,75 -0,97 und eine Korngröße zwischen 5 und 30 mm auf. In Fig. 11 ist der Standardsatz zur Bestimmung der Sphärizität nach Rittenhouse dargestellt. Durch die Korngröße des Granulats kann auch die Größe der entsprechenden färbigen Flächen der Kunststeinplatte 7 auf einfache Weise beeinflusst werden.

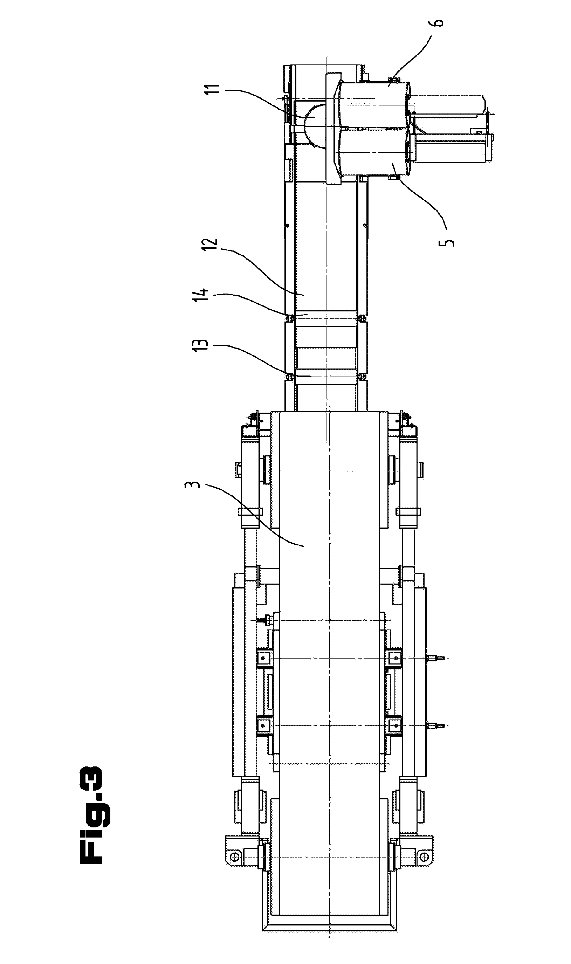

Durch eine geneigte Anordnung der Trommeln 5, 6 kann das erzeugte Granulat, welches die oben genannten Eigenschaften aufweist, aus der entsprechenden Trommel 5 bzw. 6 herausfallen. Die aus den Trommeln 5 und 6 austretenden farbigen Granulate 10 und 11 werden über eine Zuführvorrichtung 10, die einen Aufnahmebereich und einen Abgabebereich aufweist, auf eine Verteilervorrichtung 11 aufgebracht. Die Zuführvorrichtung 10 kann beispielsweise trichterförmig bzw. als Trichter ausgebildet sein. In der hier dargestellten Ausführungsform der Erfindung ist die mittels der Zuführvorrichtung 10 beschickte Verteilervorrichtung 11 unter den Auslassöffnungen der Trommeln 5 und 6 angeordnet. Die Verteilervorrichtung 11 ist als ein angetriebener Drehteller ausgebildet wie dies aus Fig. 3 ersichtlich ist.

Durch eine Rotation des Drehtellers 11 um eine normal zu seiner Oberfläche verlaufende Achse werden die aus den Trommeln 5, 6 ausgeworfenen und auf den Drehteller 11 auftreffenden Partikeln des Granulats unterschiedlicher Farben homogen über die Breite des Unterbandes 2 bzw. über die Breite eines dem Unterband 2 vorgeschalteten Förderbandes 12 verteilt. Anstelle der Verwendung des Förderbandes 12, welches der Doppelbandpresse vorgeordnet ist, könnte das Granulat auch direkt auf dem Unterband 2 verteilt werden. In diesem Fall würde auf das Förderband 12 verzichtet werden und das Unterband 2, welches die Funktion des dargestellten Förderbandes 12 übernehmen würde, wäre länger ausgebildet als das Oberband 3 der Doppelbandpresse.

Der Drehteller 11 kann eine mit einem elastomeren Material, beispielsweise Gummi, beschichtete Oberfläche aufweisen, um das Granulat besser auf dem Unterband 2 bzw. dem Förderband 12 verteilen zu können.

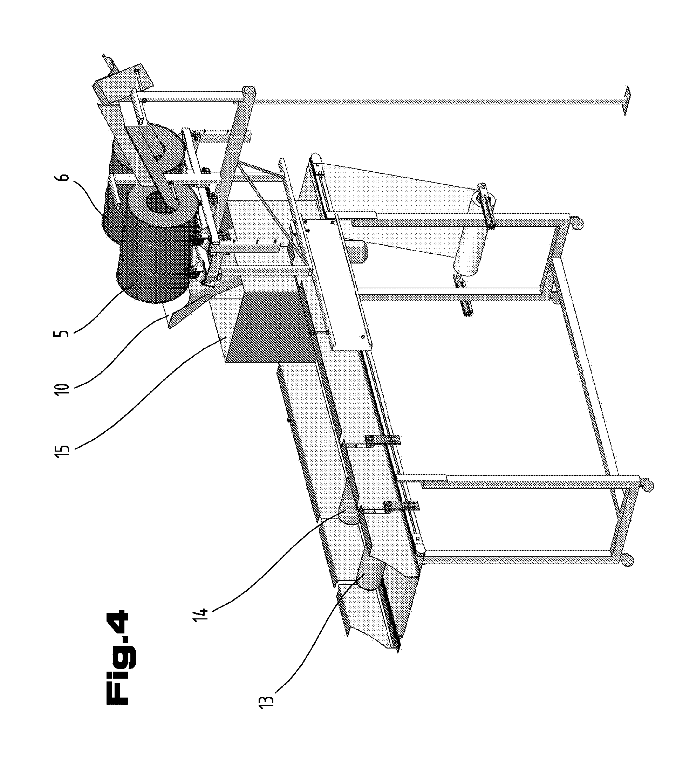

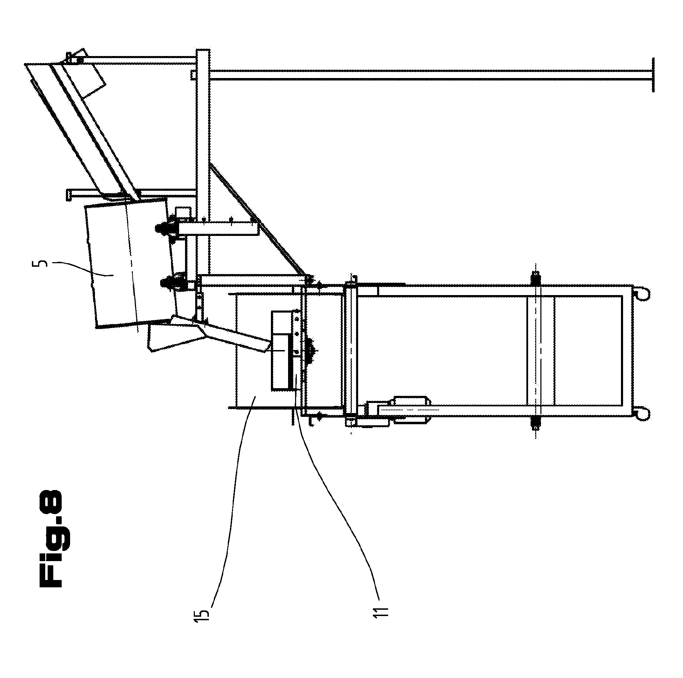

Wie in Fig. 4 dargestellt, kann der Drehteller 11 in Umfangsrichtung teilweise von einer Blende 15 umgeben sein. Die Blende 15 kann in Transportrichtung des Unterbandes 2 bzw. des Förderbandes 12 offen sein, wie dies aus Fig. 8 ersichtlich ist.

Das homogen auf dem Unterband 2 bzw. dem Förderband 12 verteilte Granulat kann mittels Vorverdichterwalzen 13 und 14 (Fig. 3, 4, 10) zu einem plattenförmigen Vorformling definierter Höhe verdichtet werden. Anschließend wird der Vorformling in der Doppelbandpresse zu der Platte 7 verpresst, wobei unter Doppelbandpresse Heizelement zur Aushärtung der Platte 7 aufweisen kann.

Die Ausführungsbeispiele zeigen mögliche Ausführungsvarianten der erfindungsgemäßen Vorrichtung bzw. des erfindungsgemäßen Verfahrens, wobei an dieser Stelle bemerkt sei, dass die Erfindung nicht auf die speziell dargestellten Ausführungsvarianten derselben eingeschränkt ist.

### Bezugszeichenaufstellung

- 1: Vorrichtung
- 2: Unterband
- 3: Oberband
- 4: Beschickungsvorrichtung
- 5: Trommel

- 6: Trommel
- 7: Kunststeinplatte
- 8: Mitnehmer
- 9: Mitnehmer
- 10: Zuführvorrichtung

- 11: Verteilervorrichtung; Drehteller
- 12: Förderband
- 13: Vorverdichterwalze
- 14: Vorverdichterwalze
- 15: Blende

- a1: Achse
- a2: Achse

## Patentansprüche

1. Vorrichtung (1) zur Herstellung einer Platte (9) aus Kunststeinmaterial mit einer Doppelbandpresse mit einem Unterband (2) und einem Oberband (3), wobei die Vorrichtung eine Beschickungsvorrichtung (4) zur Beschickung der Doppelbandpresse mit einem Material für die Platte (9) aufweist,
**dadurch gekennzeichnet,**
**dass** die Beschickungsvorrichtung (4) zumindest zwei um Ihre Längsachse (a1, a2) drehbare Trommeln (5, 6) aufweist und dass unter einer Auslassöffnung der Trommeln (5, 6) ein Drehteller (11) zur Verteilung eines aus den Trommeln (5, 6) austretenden Granulats vorgesehen ist.

2. Vorrichtung nach Anspruch 1, **dadurch gekennzeichnet dass** zumindest eine den Drehteller (11) seitlich teilweise umgebene Blende (15) vorgesehen ist, wobei die Blende (15) in Transportrichtung des Granulats in Richtung der Doppelbandpresse offen ist.

3. Vorrichtung nach Anspruch 2, **dadurch gekennzeichnet dass**, dass die Blende (15) gegenüber dem Drehteller (11) ortsfest angeordnet ist.

4. Vorrichtung nach einem der Ansprüchen 1 bis 3, **dadurch gekennzeichnet dass** der Drehteller (11) mit einer Schicht aus einem elastomeren Material, insbesondere Gummi, beschichtet ist.

5. Vorrichtung nach einem der Ansprüche 1 bis 4, **dadurch gekennzeichnet dass** zwischen den zumindest zwei Trommeln (5, 6) und dem Drehteller (11) zumindest eine Zuführvorrichtung (10) vorgesehen ist.

6. Vorrichtung nach den Anspruch 5, **dadurch gekennzeichnet dass** die Zuführeinheit (10) trichterförmig ausgebildet ist.

7. Verfahren zur Herstellung einer Platte (9) aus Kunststeinmaterial bestehend aus einem mineralischen Füllstoff und einem polymeren Bindemittel,
**dadurch gekennzeichnet,**
**dass** in einem ersten Schritt ein Füllgemisch eines Ausgangsmaterials für die Herstellung der Platte je einer Farbe in je eine von mehreren Trommeln (5, 6) gefüllt und in einem zweiten Schritt durch Rotation der Trommeln (5, 6) in einem Granulierungsprozess aus dem Füllgemisch ein Granulat hergestellt wird, welches in zumindest einem weiteren Schritt zu der Platte (9) verpresst wird, wobei sich die genannten Farben in den einzelnen Trommeln (5, 6) jeweils voneinander unterscheiden.

8. Verfahren nach Anspruch 7, **dadurch gekennzeichnet, dass** der Granulierungsprozess solange durchgeführt wird, bis die Partikel des mit den Trommeln (5, 6) erzeugten Granulats eine vorgegebene Sphärizität aufweisen.

9. Verfahren nach Anspruch 8, **dadurch gekennzeichnet, dass** der Granulierungsprozess solange durchgeführt wird, bis die Partikel eine Sphärizität nach Rittenhouse von 0,75 -0,97 aufweisen.

10. Verfahren nach einem der Ansprüche 7 bis 9, **dadurch gekennzeichnet, dass** der Granulierungsprozess zwei solange durchgeführt wird, bis die Partikel des Granulats eine Korngrösse mit einem Durchmesser von 5 mm - 30 mm haben.

11. Verfahren nach einem der Ansprüchen 7 bis 10, **dadurch gekennzeichnet, dass** in dem ersten Schritt den Trommeln (5, 6) ein Füllgemisch zugeführt wird, welches zumindest 60% Steinmaterial, insbesondere Steinmehl, mit einer Partikelgröße von 1 µm bis 10 mm aufweist.

## Claims

1. Device (1) for producing a slab (9) from an artificial stone material comprising a double-belt press with a lower belt (2) and an upper belt (3), the device comprising a charging device (4) for charging the double-belt press with a material for the slab (9), **characterized in that** the charging device (4) comprises at least two drums (5, 6) that are rotatable about their longitudinal axis (a1, a2) and that below an outlet opening of the drums (5, 6) a rotary disc (11) is provided for distributing a granulate exiting from the drums (5, 6).

2. Device according to claim 1, **characterized in that** at least one screen (15) is provided that at least partly surrounds the rotary disc (11) laterally, wherein the screen (15) is open in transport direction of the granulate in the direction of the double-belt press.

3. Device according to claim 2, **characterized in that** the screen (15) is fixed relative to the rotary disc (11).

4. Device according to one of claims 1 to 3, **characterized in that** the rotary disc (11) is coated with a layer made from an elastomer material, in particular rubber.

5. Device according to one of claims 1 to 4, **characterized in that** between the at least two drums (5, 6) and the rotary disc (11) at least one feeding unit (10) is provided.

6. Device according to claim 5, **characterized in that** the feeding unit (10) is in the form of a funnel.

7. Method for producing a slab (9) from artificial stone material consisting of a mineral filler and a polymer binding agent, **characterized in that** in a first step a filling mixture consisting of a starting material for producing the slab of one color is filled into one of several drums (5, 6) and in a second step by rotating the drums (5, 6) a granulate is produced from the filling mixture in a granulation process, which is compressed in at least one further step to form the slab (9), wherein the said colors in the individual drums (5, 6) differ from one another respectively.

8. Method according to claim 7, **characterized in that** the granulation process is performed until the particles of the granulate produced by the drums (5, 6) have a predetermined sphericity.

9. Method according to claim 8, **characterized in that** the granulation process is performed until the particles have a Rittenhouse sphericity of 0.75 -0.97.

10. Method according to one of claims 7 to 9, **characterized in that** the granulation process two is performed until the particles of the granulate have a grain size with a diameter of 5 mm - 30 mm.

11. Method according to one of claims 7 to 10, **characterized in that** in the first step a filling mixture is added to the drums (5, 6), which comprises at least 60% stone material, in particular stone powder, with a particle size von 1 µm to 10 mm.

## Revendications

1. Dispositif (1) pour la fabrication d'une plaque (9) en pierre reconstituée à l'aide d'une presse à deux bandes ayant une bande inférieure (2) et une bande supérieure (3), le dispositif étant pourvu d'un dispositif d'alimentation (4) pour alimenter la presse à deux bandes avec un matériau pour une plaque (9),
**caractérisé en ce que**
le dispositif d'alimentation (4) comprend au moins deux tambours (5, 6) rotatifs autour de leur axe longitudinal (a1, a2) et **en ce que**, en dessous d'une ouverture de sortie des tambours (5, 6), est prévu un plateau tournant (11) pour la distribution d'un granulat sortant des tambours (5, 6).

2. Dispositif selon la revendication 1, **caractérisé en ce qu'**il est prévu au moins un cache (15) entourant le plateau tournant (11) latéralement au moins partiellement, le cache (15) étant ouvert dans la direction de transport du granulat vers la presse à deux bandes.

3. Dispositif selon la revendication 2, **caractérisé en ce que** le cache (15) est disposé en position fixe par rapport au plateau tournant (11).

4. Dispositif selon l'une des revendications 1 à 3, **caractérisé en ce que** le plateau tournant (11) est recouvert d'une couche de matériau élastomère, notamment de caoutchouc.

5. Dispositif selon l'une quelconque des revendications 1 à 4, **caractérisé en ce que**, entre les deux ou plus de tambours (5, 6) et le plateau tournant (11), il est prévu au moins un dispositif d'amenée (10).

6. Dispositif selon la revendication 5, **caractérisé en ce que** le dispositif d'amenée (10) a une forme d'entonnoir.

7. Procédé de fabrication d'une plaque (9) en pierre reconstituée formée d'une charge minérale et d'un liant polymère,
**caractérisé en ce que**,
dans une première étape, un mélange de charge d'un matériau de départ d'une couleur chacun pour la fabrication de la plaque est introduit respectivement dans un de plusieurs tambours (5, 6) et que, dans une deuxième étape, un granulat est réalisé à partir du mélange de charge dans un processus de granulation par rotation des tambours (5, 6), ledit granulat étant pressé dans au moins une étape supplémentaire en une plaque (9), les couleurs dans les différents tambours (5, 6) étant différentes les unes des autres.

8. Procédé selon la revendication 7, **caractérisé en ce que** le processus de granulation est effectué jusqu'à ce que les granulés du granulat réalisé à l'aide des tambours (5, 6) présentent une sphéricité prédéterminée.

9. Procédé selon la revendication 8, **caractérisé en ce que** le processus de granulation est effectué jusqu'à ce que les granulés présentent une sphéricité de Rittenhouse de 0,75 à 0,97.

10. Procédé selon l'une des revendications 7 à 9, **caractérisé en ce que** le processus de granulation est effectué jusqu'à ce que les granulés du granulat présentent une granulométrie avec un diamètre de 5 mm à 30 mm.

11. Procédé selon l'une des revendications 7 à 10, **caractérisé en ce que**, dans la première étape, un mélange de charge est amené aux tambours (5, 6) qui comprend au moins 60 % de matière pierreuse, notamment de la farine de pierre, ayant une granulométrie de 1 µm à 10 mm.
